# EUROPEAN PATENT APPLICATION

(11) **EP 2 833 456 A1**
(43) Date of publication of application: **04.02.2015**
(21) Application number: 13767750.6
(22) Date of filing: 18.03.2013
(51) Int. Cl.: H01M 8/06, H01M 8/04, H01M 8/10

(54) **SECONDARY BATTERY FUEL CELL SYSTEM**

(30) Priority: 28.03.2012 JP 2012072947
(71) Applicant: Konica Minolta, Inc., Tokyo 100-7015 (JP)
(72) Inventor: UEYAMA Masayuki, Tokyo 100-7015 (JP)
(74) Representative: Hoffmann Eitle
(86) International application number: PCT/JP2013/057586
(87) International publication number: WO 2013/146396

(57) **Abstract**

A secondary battery fuel system comprises: a fuel generation member that generates a fuel by a chemical reaction and is renewable by a reverse reaction of the chemical reaction; a fuel cell; a gas circulation line that circulates a gas between the fuel generation member and the fuel cell; an external fuel gas supply line that supplies a fuel gas output from an external gas supply source to the gas circulation line; a gas exhaust line that exhausts the gas from the gas circulation line; first and second open-close parts; and a control part. When switching from power generation employing external fuel gas to either a power generation operation employing circulation gas or a charging operation which regenerates the fuel generation member, the control part closes the gas exhaust line with the second open-close part, and then closes the external fuel gas supply line with the first open-close part.

## Description

### Technical Field

The present invention relates to a secondary battery fuel cell system that is able to perform not only a power generation operation but also a charge operation.

### Background Art

A fuel cell has typically a cell structure in which a solid polymer electrolyte membrane using a solid polymer ion exchange membrane, a solid oxide electrolyte membrane using yttria stabilized zirconia (YSZ), or the like is sandwiched between a fuel electrode (anode) and an oxidizer electrode (cathode) from both sides. And, a fuel gas flow path for supplying a fuel gas (e.g., hydrogen gas) to the fuel electrode and an oxidized gas flow path for supplying an oxidizer gas (e.g., oxygen or air) to the oxidizer electrode are formed, the fuel gas and the oxidizer gas are supplied respectively to the fuel electrode and the oxidizer electrode via these flow paths, whereby power generation is performed.

The fuel cell has by nature a high efficiency in derivable power energy; accordingly, the fuel cell has a form of power generation that is not only useful to energy saving but also excellent environmentally, and is expected as a key to solution to global energy and environmental problems.

### Citation List

### Patent Literature

Patent Document1: PCT International Publication WO/2011/030625

### Summary of Invention

### Technical Problem

The Patent Document 1 discloses a secondary battery fuel cell that includes a fuel cell portion and a fuel generation member which generates, by a chemical reaction, a fuel, namely, a reducing substance and is renewable by a reverse reaction of the chemical reaction. In the secondary battery fuel cell disclosed in the Patent Document 1, a space, which seals a fuel electrode of the fuel cell portion and the fuel generation portion, is a closed space, and in the closed space, a fuel gas necessary for power generation by the fuel cell portion and a generated gas (this gas is called a charge gas because it is necessary for renewal of the fuel generation member during a period of a charge operation) generated by a power generation reaction of the fuel cell portion exist.

However, the above closed space is formed by enclosure by a plurality of members; accordingly, there is a case where the gas leaks, although a slight amount, from seams among the members. Especially in a case where hydrogen is used as the fuel gas, the leak is prone to occur because of a small molecular weight. If the gas leaks from the above closed space to decrease over a long-period elapse and pressure in the above closed space becomes lower than a predetermined value (this state is called a gas shortage state), the fuel gas and the charge gas run short, so that power generation performance and charge performance decline. On the other hand, it is not preferable that to prevent or obviate the gas shortage state, maintenance work is performed or a gas replenishing device for the maintenance is disposed, because this incurs a decline in convenience and an increase in cost.

In light of the above circumstances, it is an object of the present invention to provide a secondary battery fuel cell system that is capable of preventing or obviating a gas shortage state while performing power generation operation.

### Solution to Problem

To achieve the above object, a secondary battery fuel cell system according to an aspect of the present invention has a structure that comprises: a fuel generation member that generates a fuel by a chemical reaction and is renewable by a reverse reaction of the chemical reaction; a fuel cell; a gas circulation line that circulates a gas between the fuel generation member and the fuel cell; an external fuel gas supply line that supplies a fuel gas output from an external gas supply source to the gas circulation line; a gas exhaust line that exhausts the gas from the gas circulation line; a first open-close portion that opens and closes the external fuel gas supply line; a second open-close portion that opens and closes the gas exhaust line; and a control portion that controls the first open-close portion and the second open-close portion, at a time of performing a switchover from a power generation operation using the fuel gas output from the external gas supply source to a power generation operation using the fuel gas output from the fuel generation member or to a charge operation for renewing the fuel generation member, the control portion makes the second open-close portion close the gas exhaust line, thereafter, makes the first open-close portion close the external fuel gas supply line. In the meantime, it is sufficient for the gas circulation line to be able to circulate the gas between the fuel generation member and the fuel cell when the external fuel gas supply line and the gas supply line are closed.

According to the above structure, during a period of the power generation operation that uses the fuel gas output from the external gas supply source, the fuel gas output from the external gas supply source is supplied to the gas circulation line.

Besides, according to the above structure, at the time of performing the switchover from the power generation operation using the fuel gas output from the external gas supply source to the power generation operation using the fuel gas output from the fuel generation member or to the charge operation for renewing the fuel generation member, namely, at the time when the gas circulation line is switched from an open space to a closed space, the gas exhaust line is closed, thereafter, the external fuel gas supply line is closed; accordingly, the gas circulation line is never trapped into a gas shortage state caused by the above switchover.

### Brief Description of Drawings

[Fig. 1] is a schematic view showing a whole structure of a secondary battery fuel cell system according to an embodiment of the present invention.
[Fig. 2] is a simple view of a secondary battery fuel cell system according to an embodiment of the present invention that shows a gas flow during a period of a power generation operation that uses an external fuel gas.
[Fig. 3] is a simple view of a secondary battery fuel cell system according to an embodiment of the present invention that shows a gas flow during a period of a power generation operation that uses a circulation gas or a charge operation.
[Fig. 4] is a flow chart showing operation during a period of an operation switchover from a power generation operation that uses an external fuel gas.
[Fig. 5] is a flow chart showing operation from a power generation operation using an external fuel gas to an operation stop.
[Fig. 6] is a flow chart showing operation at a start time of a power generation operation that uses a circulation gas or a charge operation.
[Fig. 7] is a schematic view showing a whole structure of a secondary battery fuel cell system according to another embodiment of the present invention.
[Fig. 8] is a simple view of a secondary battery fuel cell system according to another embodiment of the present invention that shows a gas flow during a period of a power generation operation that uses an external fuel gas.
[Fig. 9] is a simple view of a secondary battery fuel cell system according to another embodiment of the present invention that shows a gas flow during a period of a power generation operation that uses a circulation gas or a charge operation.

### Description of Embodiments

Embodiments of the present invention are described with reference to the drawings. In the meantime, the present invention is not limited to the embodiments described later.

### <Whole structure>

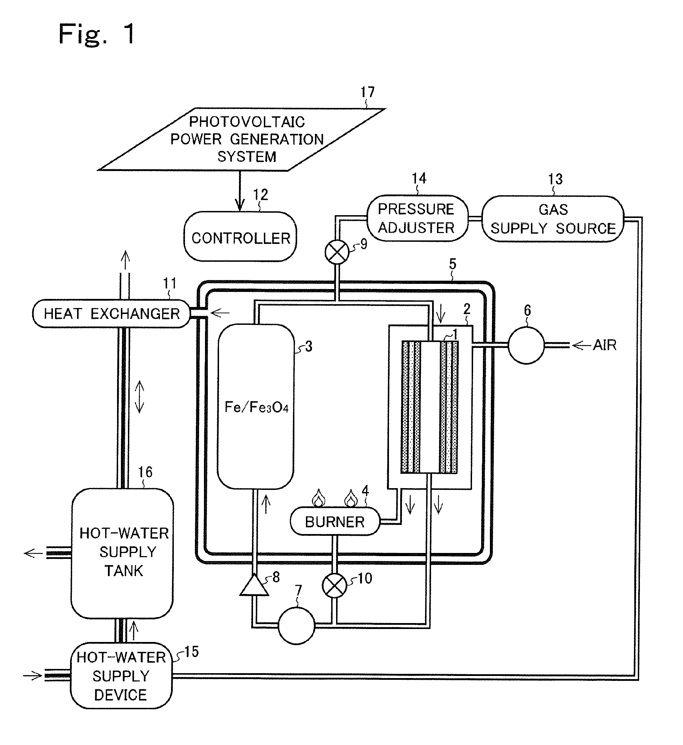

Fig. 1 shows a whole structure of a secondary battery fuel cell system according to an embodiment of the present invention. The secondary battery fuel cell system according to the embodiment of the present invention shown in Fig. 1 shows an example in which the present invention is applied to a fuel cell cogeneration system for home use, but the secondary battery fuel cell system according to the present invention is not limited to the cogeneration system.

In the secondary battery fuel cell system according to the embodiment of the present invention shown in Fig. 1, a heat insulation container 5 disposes therein: a fuel cell container 2 that houses a tube-like fuel cell 1; a fuel generation container 3 that houses a fuel generation member; a burner 4 that burns an exhaust gas from a fuel electrode side of the tube-like fuel cell 1; and a portion of a gas circulation line that circulates a gas between the fuel cell 1 and the fuel generation member. In the present embodiment, one tube-like fuel cell 1 is housed in the fuel cell container 2, but a plurality of the tube-like fuel cells 1 may be housed.

The secondary battery fuel cell system according to the embodiment of the present invention shown in Fig. 1 includes also: a blower 6; a circulator 7; a check valve 8; a supply valve 9; an exhaust valve 10; a heat exchanger 11; and a controller 12. The controller 12 controls a whole operation of the secondary battery fuel cell system according to the embodiment of the present invention shown in Fig. 1.

The blower 6 introduces outside air (air) to an air electrode of the tube-like fuel cell 1. An exhaust gas containing oxygen from the air electrode side of the tube-like fuel cell 1 is introduced into the burner 4. The circulator 7 and the check valve 8 are disposed in a portion of the gas circulation line located outside the above heat insulation container 5. The circulator 7 forcibly circulates the gas in the above gas circulation line, and the check valve 8 prevents the gas from flowing into the tube-like fuel cell 1 from the fuel generation container 3 via the circulator 7.

The supply valve 9 is disposed in an external fuel gas supply line, and the exhaust valve 10 is disposed in a gas exhaust line. When the supply valve 9 is opened by control of the controller 12, the external fuel gas supply line supplies a fuel gas, which is output form an external gas supply source 13 and adjusted in pressure by a pressure adjuster 14, to the gas circulation line. When the exhaust valve 10 is opened by control of the controller 12, the gas exhaust line exhausts the gas from the gas circulation line and supplies the gas to the burner 4. The external gas supply source 13 can use, for example, a hydrogen cylinder, a hydrogen supply facility, town gas and the like. There is a case where a publicly known gas reformer is disposed depending on the kind of the gas output from the external gas supply source 13. The pressure adjuster 14 adjusts a pressure of the fuel gas output from the external gas supply source 13 to a pressure suitable for the secondary battery fuel cell system according to the embodiment of the present invention shown in Fig. 1.

The gas after being burnt by the burner 4 is exhausted to outside via the heat exchanger 11. The heat exchanger 11 heats water by using heat obtained by a heat exchange, while an external hot-water supply device 15 heats water by using the fuel gas from the gas supply source 13. The water heated by the heat exchange and the water heated by the hot-water supply device 15 are stored into a hot-water supply tank 16 as hot-water to be supplied. Power generated by the photovoltaic power generation system 17 is used, for example, as power necessary for an electrolysis operation of the tube-like fuel cell 1.

Next, details of the tube-like fuel cell 1 are described. In the tube-like fuel cell 1, a fuel electrode, an electrolyte, and an air-electrode layer are successively formed from an inner portion of the tube, and the fuel gas passes in the tube.

As a material of the electrolyte, it is possible to use, for example, a solid oxide electrolyte that uses yttria stabilized zirconia (YSZ), besides, for example, it is possible to use a solid polymer electrolyte such as Nafion (trademark of Du Pont), cation electro-conductive polymer, anion electro-conductive polymer, or the like; however, these are not limiting, and materials, which transmit hydrogen ions, oxygen ions, hydroxide ions or the like and satisfy the electrolyte characteristics of the fuel cell, may be used. In the meantime, in the present embodiment, as the electrolyte, an electrolyte which transmits oxygen ions or hydroxide ions, for example, a solid oxide electrolyte which utilizes yttria stabilized zirconia (YSZ) is used such that water is generated at the fuel electrode during a period of power generation.

The electrolyte can be formed by using CVD-EVD (Chemical Vapor Deposition-Electrochemical Vapor Deposition) or the like in the case of a solid oxide electrolyte, and can be formed by using an applying method or the like in the case of a solid polymer electrolyte.

The fuel electrode and the air electrode can each have a structure which includes, for example, a catalyst layer in contact with the electrolyte and a diffusion electrode laminated on the catalyst layer. As the catalyst layer, it is possible to use, for example, a material or the like in which platinum black or platinum alloy is borne by carbon black. Besides, as a material of the diffusion electrode of the fuel electrode, it is possible to use, for example, carbon paper, Ni-Fe based cermet, Ni-YSZ based cermet or the like. Besides, as a material of the diffusion electrode of the air electrode, it is possible to use, for example, carbon paper, a La-Mn-O based compound, a La-Co-Ce based compound or the like.

The fuel electrode and the air electrode can be each formed by using vapor deposition or the like, for example.

In the tube-like fuel cell 1, during the period of the power generation operation, a reaction of a formula (1) described below occurs at the fuel electrode.

H₂ + O²⁻ → H₂O + 2e- (1)

The electrons generated by the reaction of the above formula (1) reach the air electrode via an external load (not shown) that is connected to the tube-like fuel cell 1 by the control of the controller 12, so that a reaction of a formula (2) described below occurs at the air electrode.

(1/2)O₂ + 2e- → O²⁻ (2)

And, the oxygen ions generated by the reaction of the above formula (2) reach the fuel electrode via the electrolyte. By repeating the above series of reactions, the tube-like fuel cell 1 performs the power generation operation. Besides, as is understood from the above formula (1), during the period of the power generation operation, H₂ is consumed by the fuel electrode to generate H₂O.

When power (e.g., power generated by the photovoltaic power generation system 17, power at night of a commercial power source and the like) that is output from an external power source is supplied to the tube-like fuel cell 1 by the control of the controller 12, reverse reactions of the above formulas (1) and (2) occur, so that the tube-like fuel cell 1 performs an electrolysis operation. Besides, as is understood from the above formula (1), during a period of the electrolysis operation, H₂O is consumed by the fuel electrode to generate H₂.

Next, details of the fuel generation member housed in the fuel generation container 3 are described. The fuel generation member is a member that generates a reducing substance (fuel gas) by a chemical reaction and is renewable by a reverse reaction of the above chemical reaction. As such fuel generation member, it is possible to use, for example, a material (e.g., Fe, Mg alloy and the like) that generates hydrogen by means of oxidation; in the present embodiment, Fe, which generates hydrogen by means of oxidation, is used.

In the fuel generation member, it is desirable that a surface per unit volume is enlarged to raise its reaction characteristic. As a measure to increase the surface area per unit volume of the fuel generation member, for example, the main body of a fuel generation material may be broken into micro-particles and the micro-particles may be molded. As the breaking method, there is a method in which for example, a ball mill or the like is used to pulverize particles. Further, the surface area of the micro-particles may be further increased by generating cracks in the micro-particles by means of a mechanical method or the like, or the surface area of the micro-particles may be further increased by roughing the surface of the micro-particles by means of acid treatment, alkaline treatment, sandblasting or the like.

In the case where the gas is circulating in the gas circulation line between the fuel generation member and the tube-like fuel cell 1, during the period of the power generation operation of the tube-like fuel cell 1, the fuel generation member can generate H₂ by consuming H₂O generated by the fuel electrode of the tube-like fuel cell 1 by an oxidation reaction indicated by a formula (3) described below, and during the period of the electrolysis operation of the tube-like fuel cell 1, the fuel generation member is renewed while generating H₂O by consuming H₂ generated by the fuel electrode of the tube-like fuel cell 1 by a reduction reaction that is a reverse reaction of the oxidation reaction indicated by the formula (3).

3Fe + 4H₂O → Fe₃O₄ + 4H₂ (3)

### <Power generation operation using external fuel gas>

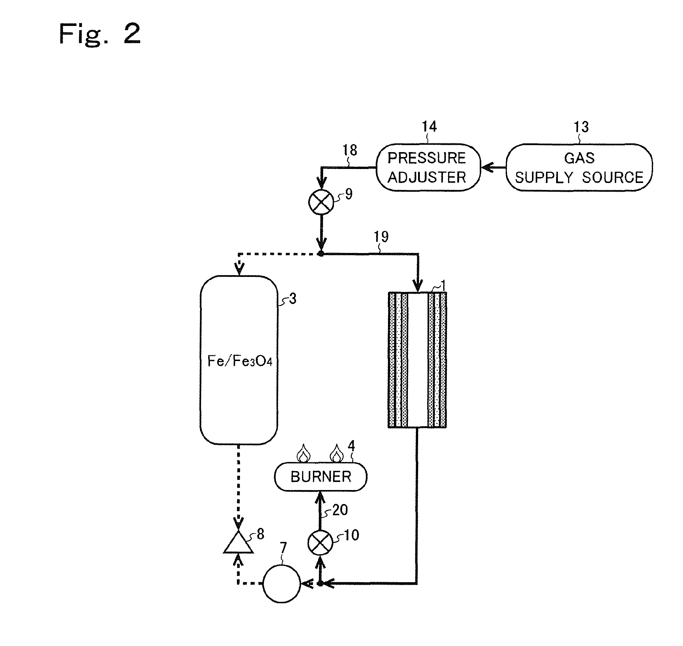

During a power generation operation that uses an external fuel gas, the supply valve 9 and the exhaust valve 10 are opened; accordingly, as shown in Fig. 2, the fuel gas (external fuel gas) output from the external gas supply source 13 is supplied from the external fuel gas supply line 18 into the gas circulation line 19 to be used for the power generation operation of the tube-like fuel cell 1, thereafter, introduced from a gas exhaust line 20 to the burner 4. In the meantime, there is the check valve 8; accordingly, the external fuel gas does not flow out to the burner 4 via the fuel generation container 3. In a case where the pressure of the fuel generation container 3 is low because of a gas leak or the like, the fuel generation container 3 is replenished with the gas until a pressure set by the pressure adjuster 14 is obtained. The burner 4 mixes the exhaust gas (exhaust gas containing the fuel gas) from the fuel electrode side of the tube-like fuel cell 1 and the exhaust gas (exhaust gas containing oxygen) from the air electrode side of the tube-like fuel cell 1 with each other and burns the mixed gas. The gas heated to a high temperature by power generation reaction heat from the tube-like fuel cell 1, oxidation reaction heat from the fuel generation member, and burning heat from the burner 4 is exhausted from the heat insulation container 5 to outside via the heat exchanger 11. As described above, the heat exchanger 11 heats water by using the heat obtained by the heat exchange, and the water heated by the heat exchange is store into the hot-water supply tank 16 as hot water to be supplied. In other words, during the power generation operation that uses the external fuel gas, not only the power generation but also the hot-water supply are performed.

During the power generation operation that uses the external fuel gas, the fuel gas output from the external gas supply source 13 is supplied to the gas circulation line 19; accordingly, it is possible to prevent or obviate a gas shortage state while performing the power generation operation that uses the external fuel gas.

### <Power generation operation using circulation gas or charge operation>

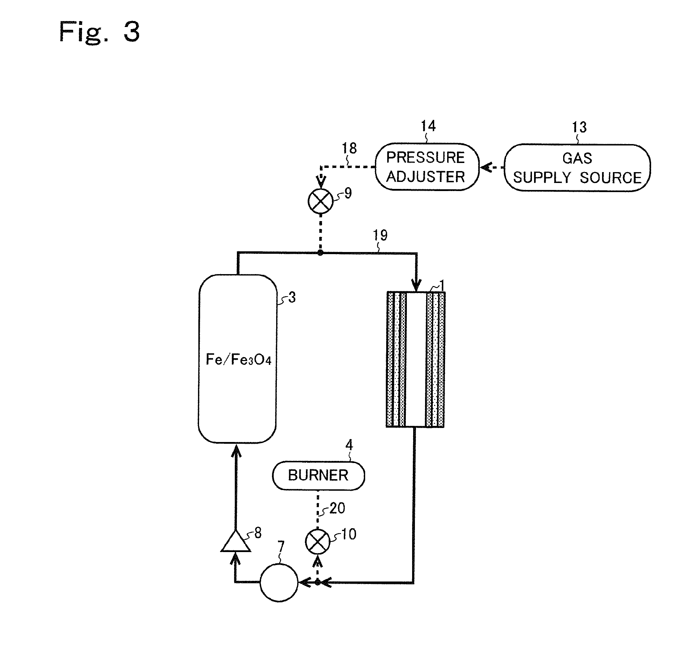

During a power generation operation using a circulation gas or a charge operation, the supply valve 9 and the exhaust valve 10 are closed; accordingly, as shown in Fig. 3, the gas flows in the gas circulation line 19 only, and the gas does not flow in the external fuel gas supply line 18 and the gas exhaust line 20. Accordingly, the burner 4 burns nothing. In the meantime, there is the power generation reaction heat from the tube-like fuel cell 1 and the oxidation reaction heat from the fuel generation member during the period of the power generation operation; accordingly, the hot-water supply is also possible, with less quantity of heat than during the power generation operation using the external fuel gas, though. Besides, also an exhaust gas containing oxygen occurs from the side of the air electrode during the period of the power generation operation using the circulation gas, but the gas is exhausted to outside as it is because the burner 4 is burning nothing during this period of the power generation operation. This exhaust gas is a gas in a state where part of oxygen in air taken in from outside is consumed to decrease. Further, during the charge operation, oxygen occurs because of electrolysis of water (water vapor), but the oxygen passes through the electrolyte to be exhausted from the side of the air electrode to outside.

### <Operation switchover from power generation operation using external fuel gas>

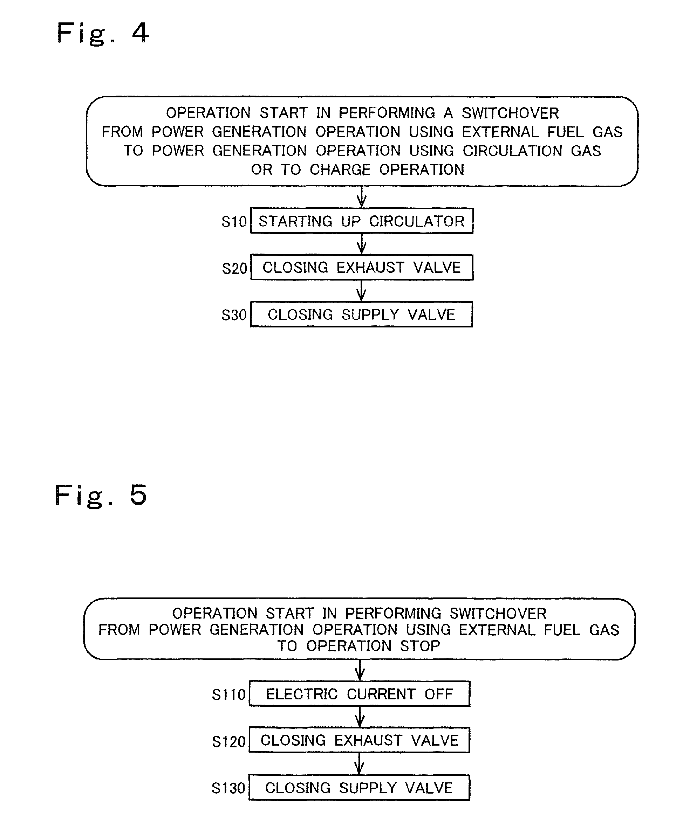

Operation when performing a switchover from the power generation operation using the external fuel gas to the power generation operation using the circulation gas or to the charge operation is described with reference to a flow chart shown in Fig. 4.

In the beginning, the controller 12 first starts up the circulator 7 (step S10), next, closes the exhaust valve 10 (step S20), finally closes the supply valve 9 (step S30). By means of such operations, at a time of performing a switchover from the power generation operation using the external fuel gas to the power generation operation using the circulation gas or to the charge operation, namely, at a time when the gas circulation line 19 is switched from an open space to a closed space, the gas exhaust line 20 is closed, thereafter, the external fuel gas supply line 18 is closed; accordingly, it is possible to prevent the gas circulation line 19 from being trapped into a gas shortage state caused by the above switchover.

In the meantime, the startup of the circulator 7 may be performed after the exhaust valve 10 is closed and the supply valve 9 is closed, but it is desirable to perform the startup before closing the exhaust valve 10 and the supply valve 9 as in the flow chart shown in Fig. 4 such that the gas flow does not stop.

### <Operation switchover from power generation operation using external fuel gas to operation stop>

Operation when performing a switchover from the power generation operation using the external fuel gas to an operation stop is described with reference to a flow chart shown in Fig. 5.

In the beginning, the controller 12 first shuts down an electric current for the tube-like fuel cell 1 by shutting down electrical connection between the tube-like fuel cell 1 and the external load, thereby stopping the power generation operation of the tube-like fuel cell 1 (step S110). Next, the controller 12 closes the exhaust valve 10 (step S120), finally closes the supply valve 9 (step S130). By means of such operations, at the time of performing the switchover from the power generation operation using the external fuel gas to the operation stop, namely, at the time when the gas circulation line 19 stops the operation from the open-space state, the gas exhaust line 20 is closed, thereafter, the external fuel gas supply line 18 is closed; accordingly, it is possible to prevent the gas circulation line 19 from being trapped into a gas shortage state caused by the above switchover.

### <Operation start of power generation operation using circulation gas or charge operation>

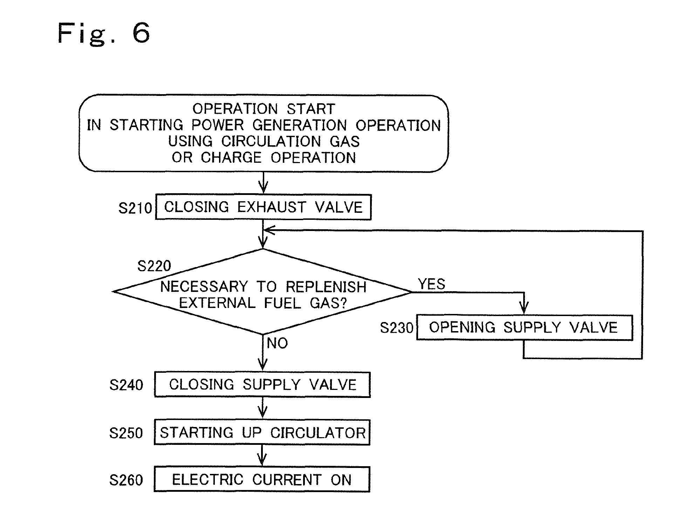

Operation when starting the power generation operation using the circulation gas or starting the charge operation is described with reference to a flow chart shown in Fig. 6.

The exhaust valve 10 should be closed during a period of the operation stop, but in the beginning, the controller 12 first closes the exhaust valve 10 just in case (step S210). Next, the controller 12 uses, for example, an output of a pressure sensor (not shown) for detecting a pressure in the gas circulation line 19 to determine whether or not the pressure in the gas circulation line 19 is lower than a suitable range and it is necessary to replenish the external fuel gas (step S220). If it is necessary to replenish the external fuel gas (YES in step S220), the controller 12 keeps the supply valve 9 open until it becomes unnecessary to replenish the external fuel gas (step S230). If it becomes unnecessary to replenish the external fuel gas (NO in step S220), the controller 12 closes the supply valve 9 (step S240), next, starts up the circulator 7 (step S250), finally electrically connects the tube-like fuel cell 1 and the external load or the external power source with each other to flow an electric current in the tube-like fuel cell 1, whereby starting the power generation operation or electrolysis operation of the tube-like fuel cell 1 (step S260). By means of such operations, at the time of performing the switchover from the operation stop to the power generation operation using the circulation gas or to the charge operation, when necessary, the external fuel gas supply line 18 is temporarily opened, thereafter, closed; accordingly, for example, even if the gas gradually leaks from the gas circulation line 19 during a long-period operation stop and the gas circulation line 19 is trapped into a gas shortage state, it is possible to obviate the gas shortage state, thereafter, start the power generation operation using the circulation gas or the charge operation.

In the meantime, in the flow chart shown in Fig. 6, it is determined whether or not it is necessary to replenish the external fuel gas, but it is a wasteful operation to replenish the gas circulation line 19 with the external fuel gas when the pressure in the gas circulation line 19 is not low, and there is not an especially major problem; accordingly, instead of the processes in the step S220 and step 230, a process of opening the supply valve 9 for a predetermine period may be performed.

### <Operation switchover from operation using circulation gas>

### <Operation start of power generation operation using external fuel gas>

When performing the switchover from the power generation operation or charge operation using the circulation gas to the power generation operation using the external fuel gas, or when starting the power generation operation using the external fuel gas, the gas circulation line 19 turns into the open space after the operation switchover or after the operation start, and the external fuel gas is supplied to the gas circulation line 19; accordingly, there is not a major problem even if the gas circulation line 19 is in a gas shortage state before the operation switchover or before the operation start. Accordingly, the order of opening the supply valve 9 and the exhaust valve 10 does not become a major problem, but from the viewpoint of avoiding a temporary pressure decline in the gas circulation line 19, it is preferable that the exhaust valve 10 is opened after the supply valve 9 is opened.

### <Others>

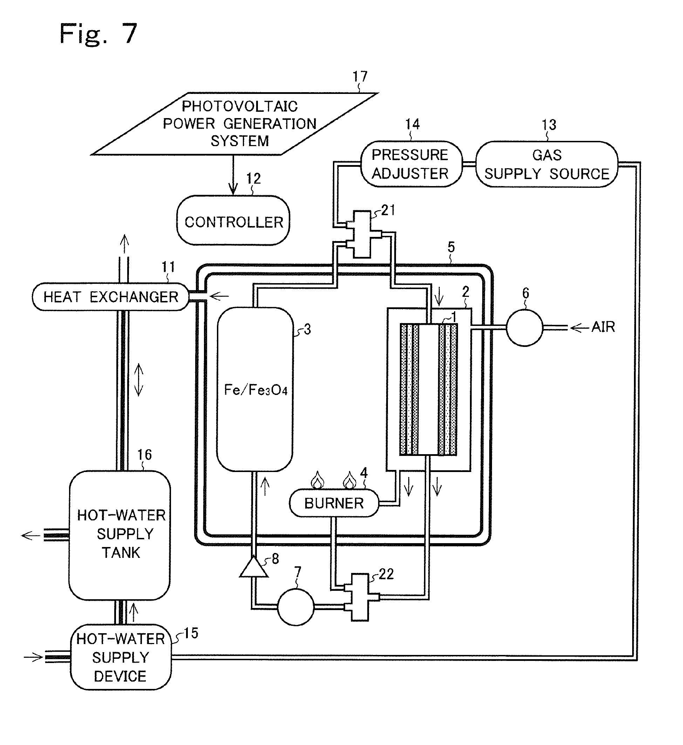

In the meantime, in the embodiments described above, the structure is employed, in which the secondary battery fuel cell system includes the supply valve 9 and the exhaust valve 10, but as shown in Fig. 7, instead of the supply valve 9 and the exhaust valve 10, it is also possible to use two-way switchover valves 21 and 22. The structure shown in Fig. 7 is a structure in which both the supply valve 9 and the exhaust valve 10 are replaced with the two-way switchover valves, but a structure is also possible, in which only either of the supply valve 9 and the exhaust valve 10 is replaced with the two-way switchover valve.

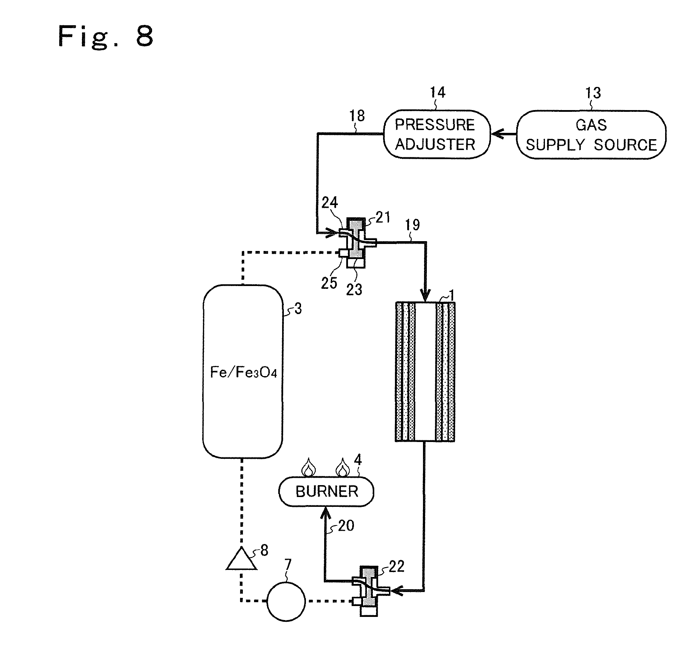

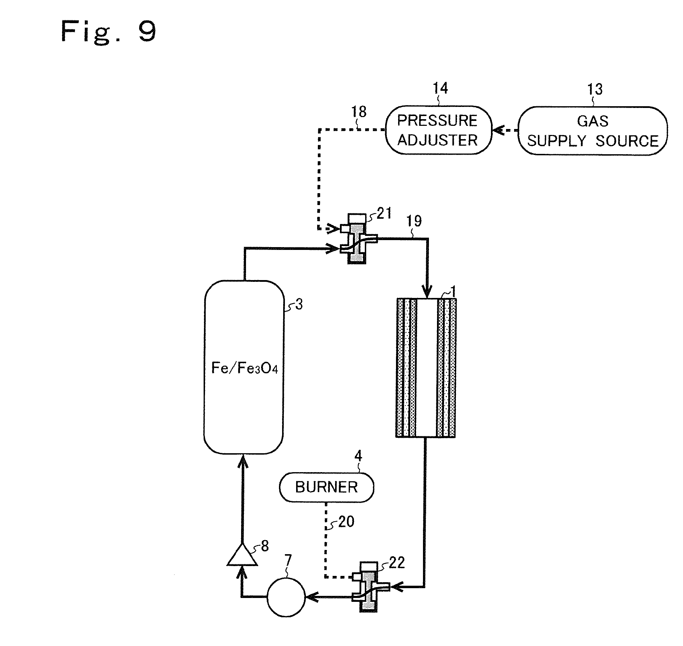

For example, as shown in Fig. 8 and Fig. 9, the two-way switchover valve has a structure in which it is possible to perform a switchover which one of a first-directional port 24 and a second-directional port 25 to be opened by means of movement of an internal cylinder 23.

Fig. 8 is a simple view showing the gas flow when the secondary battery fuel cell system shown in Fig. 7 is performing the power generation operation that uses the external fuel gas. Besides, Fig. 9 is a simple view showing the gas flow when the secondary battery fuel cell system shown in Fig. 7 is performing the power generation operation that uses the circulation gas or the charge operation.

Besides, in the above embodiments and the modification shown in Fig. 7, as the electrolyte, a solid oxide electrolyte is used to generate water at the fuel electrode during the power generation. According to this structure, the water occurs at the electrode that connects with the fuel generation member over the gas circulation line which is used to supply the fuel gas from the fuel generation member to the tube-like fuel cell 1; accordingly, it is advantageous for simplification and small size of the apparatus. On the other hand, as in the fuel cell disclosed in JP-A-2009-99491, as the electrolyte, it is also possible to use a solid polymer electrolyte that transmits hydrogen ions. However, in this case, water occurs at the air electrode during the power generation that uses the fuel gas output from the fuel generation member; accordingly, a flow path, which conducts this water to the fuel generation member, may be disposed.

Besides, in the above embodiments and the modification shown in Fig. 7, only one fuel generation container is disposed, but a plurality of the fuel generation containers may be disposed such that it is possible to switch the number of fuel generation containers and the number of renewed fuel generation containers.

The secondary battery fuel cell system described above has a structure (first structure) which includes: the fuel generation portion that generates a fuel by a chemical reaction and is renewable by a reverse reaction of the chemical reaction; the fuel cell; the gas circulation line that circulates a gas between the fuel generation member and the fuel cell; the external fuel gas supply line that supplies a fuel gas output from an external gas supply source to the gas circulation line; the gas exhaust line that exhausts the gas from the gas circulation line; the first open-close portion that opens and closes the external fuel gas supply line; the second open-close portion that opens and closes the gas exhaust line; and the control portion that controls the first open-close portion and the second open-close portion; wherein at a time of performing a switchover from the power generation operation using the fuel gas output from the external gas supply source to the power generation operation using the fuel gas output from the fuel generation member or to a charge operation for renewing the fuel generation member, the control portion makes the second open-close portion close the gas exhaust line, thereafter, makes the first open-close portion close the external fuel gas supply line. In the meantime, it is sufficient for the gas circulation line to allow the gas to be circulated between the fuel generation member and the fuel cell during the period when the external fuel gas supply line and the gas exhaust line are closed.

According to the above first structure, during the period of the power generation operation that uses the fuel gas output from the external gas supply source, the fuel gas output from the external gas supply source is supplied to the gas circulation line; accordingly, it is possible to prevent or obviate a gas shortage state of the gas circulation line while performing the power generation operation.

Besides, according to the above first structure, at the time of performing the switchover from the power generation operation using the fuel gas output from the external gas supply source to the power generation operation using the fuel gas output from the fuel generation member or to the charge operation for renewing the fuel generation member, namely, at the time when the gas circulation line is switched from the open space to the closed space, the gas exhaust line is closed, thereafter, the external fuel gas supply line is closed; accordingly, it is possible to prevent the gas circulation line from being trapped into a gas shortage state caused by the above switchover.

In the secondary battery fuel cell system having the above first structure, it is desirable to employ a structure (second structure) in which at the time of performing the switchover from the power generation operation using the fuel gas output from the external gas supply source to the operation stop, the control portion makes the second open-close portion close the gas exhaust line, thereafter, makes the first open-close portion close the external fuel gas supply line.

According to the above second structure, at the time of performing the switchover from the power generation operation using the fuel gas output from the external gas supply source to the operation stop, namely, when the gas circulation line stops the operation from the open-space state, the gas exhaust line is closed, thereafter, the external fuel gas supply line is closed; accordingly, it is possible to prevent the gas circulation line from being trapped into a gas shortage state caused by the above switchover.

In the secondary battery fuel cell system having the above first or second structure, it is desirable to employ a structure (third structure) in which at the time of performing the switchover from the operation stop to the power generation operation using the fuel gas output from the fuel generation member or to the charge operation for renewing the fuel generation member, the control portion makes the first open-close portion open temporarily the external fuel gas supply line, thereafter, makes the first open-close portion close the external fuel gas supply line.

According to the third structure, at the time of performing the switchover from the operation stop to the power generation operation using the fuel gas output from the fuel generation member or to the charge operation for renewing the fuel generation member, the external fuel gas supply line is temporarily opened, thereafter, closed; accordingly, even if the gas circulation line is trapped into a gas shortage state before the operation, it is possible to obviate the gas shortage state, thereafter, start the power generation operation that uses the fuel gas output from the fuel generation member or the charge operation for renewing the fuel generation member.

According to the secondary battery fuel cell system described above, it is possible to prevent or obviate a gas shortage state while performing the power generation operation.

### Reference Signs List

- 1: tube-like fuel cell
- 2: fuel cell container
- 3: fuel generation container
- 4: burner
- 5: heat insulation container
- 6: blower
- 7: circulator
- 8: check valve
- 9: supply valve
- 10: exhaust valve
- 11: heat exchanger
- 12: controller
- 13: gas supply source
- 14: pressure adjuster
- 15: hot-water supply device
- 16: hot-water supply tank
- 17: photovoltaic power generation system
- 18: external fuel gas supply line
- 19: gas circulation line
- 20: gas exhaust line
- 21, 22: two-way switchover valves
- 23: internal cylinder
- 24: first-directional port
- 25: second-directional port

## Claims

1. A secondary battery fuel cell system comprising:
a fuel generation member that generates a fuel by a chemical reaction and is renewable by a reverse reaction of the chemical reaction;
a fuel cell;
a gas circulation line that circulates a gas between the fuel generation member and the fuel cell;
an external fuel gas supply line that supplies a fuel gas output from an external gas supply source to the gas circulation line;
a gas exhaust line that exhausts the gas from the gas circulation line;
a first open-close portion that opens and closes the external fuel gas supply line;
a second open-close portion that opens and closes the gas exhaust line; and
a control portion that controls the first open-close portion and the second open-close portion, at a time of performing a switchover from a power generation operation using the fuel gas output from the external gas supply source to a power generation operation using the fuel gas output from the fuel generation member or to a charge operation for renewing the fuel generation member, the control portion makes the second open-close portion close the gas exhaust line, thereafter, makes the first open-close portion close the external fuel gas supply line.

2. The secondary battery fuel cell system according to claim 1, wherein
at a time of performing a switchover from the power generation operation using the fuel gas output from the external gas supply source to an operation stop, the control portion makes the second open-close portion close the gas exhaust line, thereafter, makes the first open-close portion close the external fuel gas supply line.

3. The secondary battery fuel cell system according to claim 1 or claim 2, wherein
at a time of performing a switchover from the operation stop to the power generation operation using the fuel gas output from the fuel generation member or to the charge operation for renewing the fuel generation member, the control portion makes the first open-close portion open temporarily the external fuel gas supply line, thereafter, makes the first open-close portion close the external fuel gas supply line.
